# EUROPEAN PATENT APPLICATION

(11) **EP 0 704 721 A2**
(43) Date of publication of application: **03.04.1996**
(21) Application number: 95306627.1
(22) Date of filing: 20.09.1995
(51) Int. Cl.: G02B 5/18, G03H 1/22

(54) **Methods and apparatus for generating and displaying holographic images utilizing a laser pointer**

(30) Priority: 27.09.1994 US 312859
(71) Applicant: AT&T Corp., New York, NY 10013-2412 (US)
(72) Inventor: Beisser, Fred A., East Brunswick, New Jersey 08816 (US); Miller, David Andrew Barclay, Fair Haven, New Jersey 07704 (US); Knox, Wayne Harvey, Rumson, New Jersey 07760 (US); Morrison, Rick Lee, Naperville, Illinois 60540 (US); Nuss, Martin C., Fair Haven, New Jersey 07704 (US)
(74) Representative: Buckley, Christopher Simon Thirsk

(57) **Abstract**

Disclosed are methods and apparatus for generating and displaying a select image (106) utilizing a hand-held device (100) operable to generate a coherent radiation beam and at least one phase mask (200). Each phase mask, having a first side and a second side, includes at least one phase grating (201) fixed thereto. One or more of the phase masks are positioned such that the generated coherent radiation beam from the hand-held device intersects the first side of one or more phase masks, illuminating at least a portion of at least one of the phase gratings to thereby generate an image beam (105) to display the select image (106).

## Description

### CROSS-REFERENCE TO RELATED APPLICATION

The present invention is related to United States Patent Application Serial No. 08/312,858, Attorney Docket No. R.L. Morrison 4, entitled "Methods and Systems for Designing Beam Array Generators," commonly assigned to the assignee of the present invention, and filed concurrently herewith. The disclosure of this related Application is incorporated herein by reference.

### TECHNICAL FIELD OF THE INVENTION

The present invention relates in general to laser technology and holography, and more particularly to methods and apparatus for generating and displaying holographic images utilizing a laser pointer.

### BACKGROUND

Conventional commercial laser pointers typically project a single, simple dot upon a targeted object, exhibit or image projected on a screen. The dot, which is generally quite small, can be utilized, for example, to pinpoint a particular area on the targeted object, to mark a particular word in a textual document projected on the screen, or to draw attention to a particular component in an exhibited diagram.

The dot, is produced by generating a narrow beam of very bright light, either by firing brief pulses of light or by forming a continuous beam. The beam intersects the targeted object so that the dot, a sectional plane through the beam, is visually apparent. The dot is commercially available in only red or green. Laser light more particularly is coherent, meaning that all the rays of light have the same wavelength and are in phase, vibrating together to produce a single high-intensity light beam.

Conventional pointers, however, are typically incapable of visual adjustment, as the generated dot can neither be reduced or enlarged in size, nor may it be focused. The beam produced dot is also limited functionally to either pinpointing or marking an area of interest. The dot is incapable of storing or conveying any information other than drawing a viewing audience's attention to a particular area of interest. Due to its size, which is typically smaller than a dime, the dot is difficult to view and perceive. The dot further fails to capture and hold the attention of the viewing audience for any extended period of time. Further, focusing one's attention upon the dot for a time period may cause an increasingly uncomfortable, and even painful, eye strain. This difficulty is compounded should the laser pointer be hand-held, as the user will generally be unable to hold or maintain the laser pointer in one fixed position causing the diminutive dot to bounce erratically.

### SUMMARY OF THE INVENTION

In accordance with the principles of the present invention which combine specially designed phase gratings with laser pointer technology, the projection of a select image is facilitated from a hand-held laser pointer, as opposed to merely projecting a single dot as in conventional laser pointers. The phase, or surface relief, gratings, which are also known as holograms, are generated in part utilizing a preferred computer optimization process. The select image may be, for example, as simple as an arrow or a pointing hand, or much more sophisticated, such as a slogan, phrase or corporate logo, or a picture, such as a face or a figure.

An apparatus in accordance with the principles of the present invention for generating an image beam to display the select image includes a hand-held device operable to generate a coherent beam of radiation, and a phase mask.
The phase mask, which has both a first side and a second side, includes a phase grating, and is positioned such that the generated coherent beam of radiation intersects the first side of the phase mask, illuminating the phase grating to generate the image beam.

Another apparatus in accordance with the principles of the present invention for generating an image beam to display the select image includes a hand-held laser pointer, a substrate and a housing. The hand-held laser pointer is operable to generate and transmit a laser beam. The substrate includes at least one phase grating and is positioned within the housing so that the substrate is intersected by the transmitted laser beam. The transmitted laser beam thus intersects and illuminates the phase grating to generate the image beam.

A method for generating an image beam to display a select image in accordance with the principles of the present invention concerns positioning a first substrate, which includes a first phase grating at a first location, generating a coherent radiation beam with a hand-held device, thereby illuminating the first phase grating with the generated coherent radiation beam to generate the image beam.

### BRIEF DESCRIPTION OF THE DRAWINGS

For a more complete understanding of the present invention, and the advantages thereof, reference is made to the following descriptions taken in conjunction with the accompanying drawings in which like numbers designate like parts, and in which:
Fig. 1 illustrates an isometric view of a hand-held laser pointer for displaying holographic images in accordance with the principles of the present invention;
Fig. 2 illustrates an isometric view of a substrate housing illustrated in Fig. 1, and a single substrate which is to be positioned within the substrate housing;
Fig. 3 illustrates a cross-sectional view of the hand-held laser pointer illustrated in Fig. 1;
Fig. 4 illustrates an isometric view of an alternate embodiment of the hand-held laser pointer and substrate housing illustrated in Fig. 1;
Fig. 5a illustrates an isometric view of another alternate embodiment of the hand-held laser pointer and substrate housing illustrated in Fig. 1;
Fig. 5b illustrates one embodiment for generating an off-center image beam in accordance with the embodiment of the hand-held laser pointer illustrated in Fig. 5a;
Fig. 5c illustrates another embodiment for generating an off-center image beam in accordance with the embodiment of the hand-held laser pointer illustrated in Fig. 5a;
Fig. 5d illustrates one embodiment of a rotating ring in accordance with the embodiment of the hand-held laser pointer illustrated in Fig. 5a;
Fig. 6 illustrates a flow diagram for assembling and using the hand-held laser pointer for displaying holographic images as illustrated in Fig. 1;
Fig. 7 illustrates an artist's rendition of a phase grating designed in accordance with the principles of the present invention for use with any of the hand-held laser pointers in Figs. 1 and 3-5; and
Fig. 8 illustrates an artist's rendition of a holographic image generated utilizing any of the hand-held laser pointers in Figs. 1 and 3-5 to illuminate the phase grating in Fig. 7.

### DETAILED DESCRIPTION OF THE INVENTION

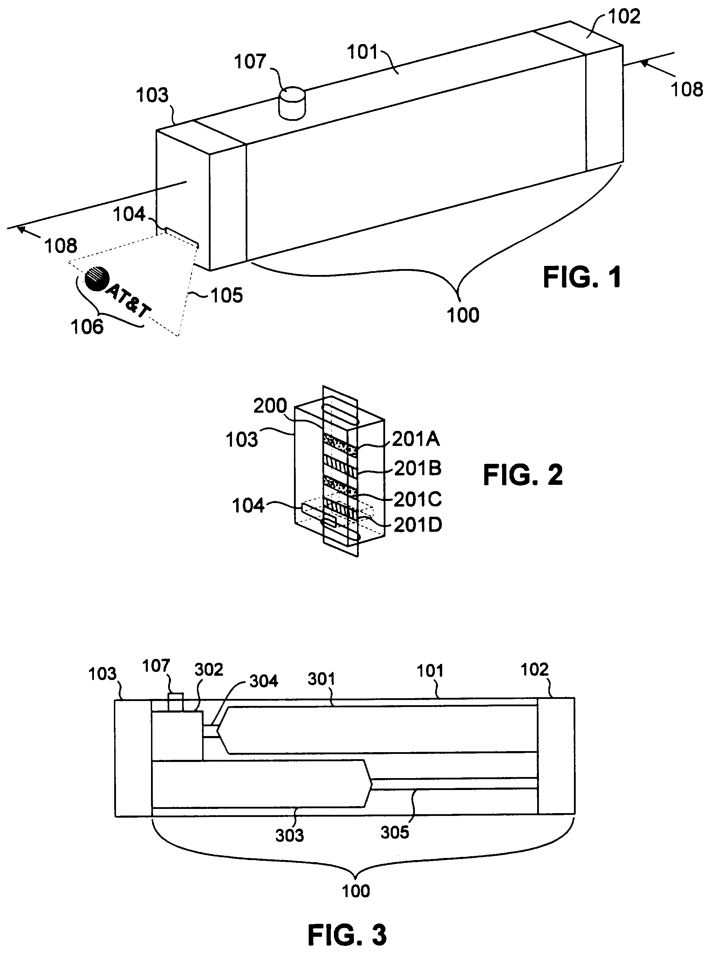

The principles of the present invention, and the features and advantages thereof, are better understood by referring to the illustrated embodiments depicted in Figs. 1-8 of the drawings.

Fig. 1 illustrates an isometric view of a hand-held laser pointer 100 for displaying holographic images in accordance with the principles of the present invention. The illustrated laser pointer 100 includes a longitudinal housing 101 having a hollow cavity (shown in Fig. 3), a cap 102, a substrate housing 103 and a button switch 107. The cap 102 and the substrate housing 103 are coupled at opposite ends of the longitudinal housing 101. The cap 102 provides means for containing a removable power-supply enclosed within the hollow cavity of the longitudinal housing 101. A preferred power-supply is more fully discussed with reference to Fig. 3. A preferred laser pointer 100 is the OEM Diode Laser System PM package, which is available from Power Technologies, Inc., located at P.O. Box 191117, Little Rock, Arkansas 72219-1117, USA. The substrate housing 103 includes an elongated aperture 104 through which an image beam 105 passes to display the holographic image 106. The image beam 105 is produced by illuminating a phase mask, or other substrate, having at least one phase grating. The phase grating is preferably illuminated using a coherent beam of radiation, such as a laser beam, which is discussed in detail with reference to Figs. 2 and 3. A laser beam, more particularly defined, is a narrow beam of coherent, and nearly monochromatic, electromagnetic radiation. The button switch 107 extends perpendicularly through an aperture in the longitudinal housing 101 and may be selectively depressed for a time period during which the laser pointer 100 is caused to generate the laser beam. In an alternate embodiment, the button switch 107 functions as a latch, reversing and maintaining its state each time it is depressed. Although the button switch 107 has been utilized in the illustrated embodiment, any suitably arranged selectably energizing or switching may be readily used in addition to or substituted for the button switch 107.

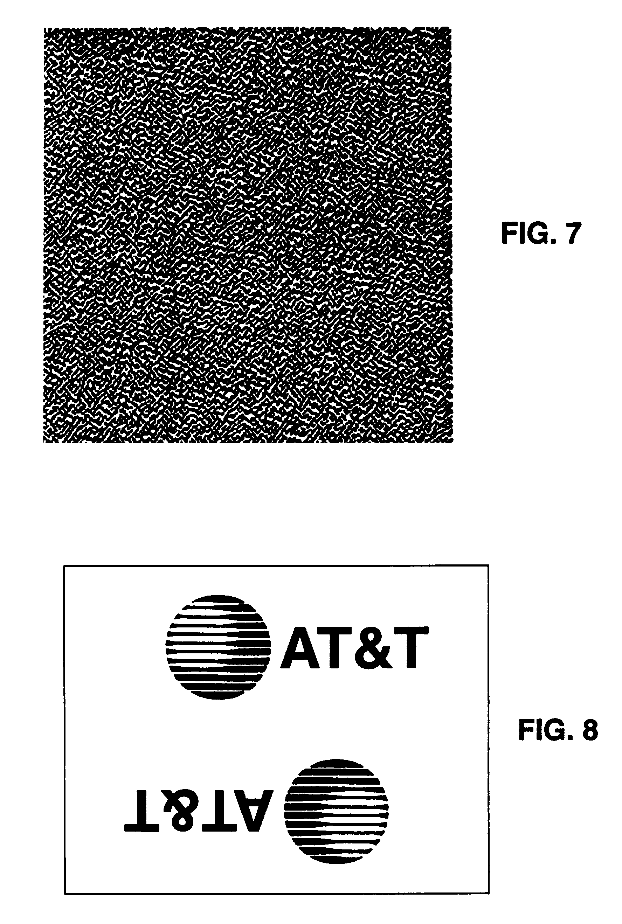

Fig. 2 illustrates an isometric view of the substrate housing 103 and a single substrate 200. The illustrated substrate 200 includes four phase gratings 201a to 201d, also referred to as beam-splitters. Each of the gratings 201 a-d is representative of a distinct wave disturbance associated with a select object, such as previously mentioned examples, arrow, hand, slogan, etc. The substrate 200 is preferably positioned vertically within the substrate housing 103 and capable of being slidably moved, downwardly and upwardly, to exchange the phase gratings 201a-d before the laser beam. In an alternate preferred embodiment, the substrate 200 is positioned horizontally and slidably moved from side to side. The substrate 200 is utilized to record and subsequently reconstruct the amplitude and phase distributions of the distinct wave disturbance representative of the select object. The amplitude and phase distributions of the wave disturbance are utilized in the optical formation of the select image. Although a single substrate 200 has been utilized herein, it should be realized that a plurality of substrates could be used wherein each substrate includes one or more individual phase gratings 201. Further, two or more of those substrates 200 may be overlapped such that the laser beam intersects portions of at least two phase gratings 201 on at least two substrates 200, to thereby generate the image beam 105. When at least one of the gratings 201a-d is intersected by the laser beam in the illustrated embodiment, it is illuminated and the representative image 106 is produced. The preferred technique for deriving the image of the select object 106 and producing the phase mask 200 is more fully discussed with reference to Fig. 6.

Fig. 3 illustrates a cross-sectional view of the hand-held laser pointer 100 illustrated in Fig. 1 taken along line 108. The longitudinal housing 101 similarly includes the cap 102, the substrate housing 103 and the button switch 107. Additionally, illustrated within the hollow cavity of the longitudinal housing 101 are a power-supply 301, switching circuitry 302 and a laser diode system 303. In the illustrated embodiment, the power-supply 301 includes two AAA batteries (3V) positioned in series, although any suitably arranged power supply may be used in addition to or substituted for the AAA batteries. The switching circuitry 302, which is responsive to the depression of the button switch 107, is operable to control the supply of power to the laser diode system 303. The laser diode system 303 preferably is a model PM 10 (635-15), which is also available from Power Technologies, Inc., located at P.O. Box 191117, Little Rock, Arkansas 72219-1117, USA. The PM 10 laser diode supplies 15mw of power at 635 nm. In the illustrated embodiment, the power-supply 301 includes both positive and negative terminals, and is coupled at its positive end with the switching circuitry 302 through contact 304, and at its negative end with the laser diode system 303 through conductive means (not shown) incident to the cap 102 and wiring 305.

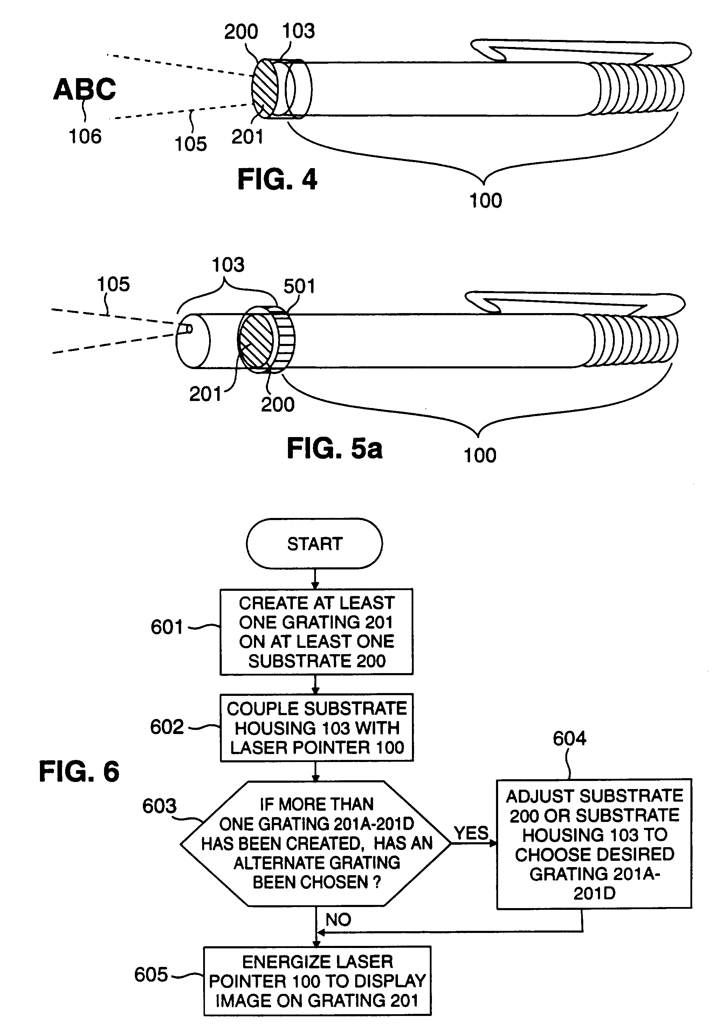

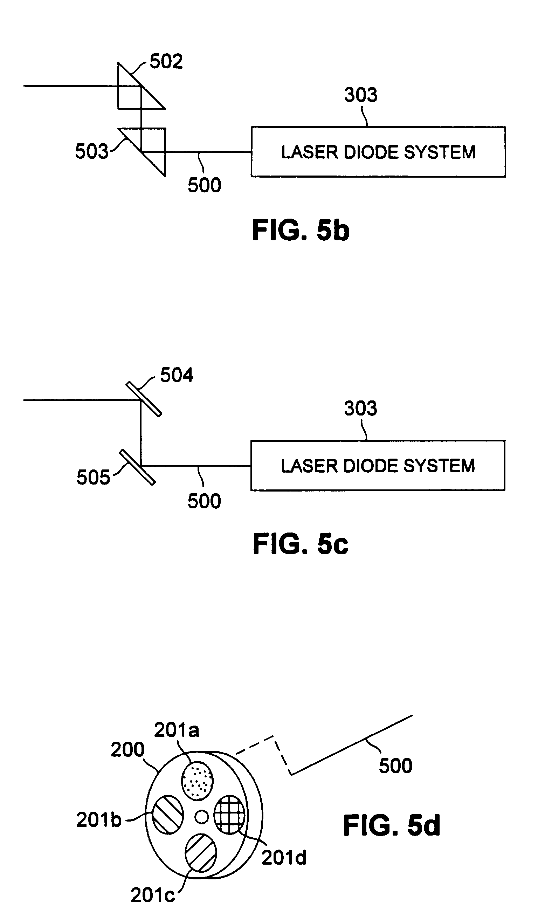

Fig. 4 illustrates an isometric view of an alternate embodiment of the hand-held laser pointer 100 illustrated in Fig. 1. In this embodiment, the substrate housing 103 is a ferrule which includes a single substrate 200 having at least one grating 201 fixed thereto. The laser pointer 100, which has a pen-like shape, is simply inserted into the ferrule 103 and energized, thereby generating the image beam 105 to display the image of the select object 106. Utilization of the ferrule embodiment enables the user to quickly and conveniently switch, or alternate, among any number of available substrates 200 and gratings 201 positioned within other suitably arranged substrate housings 103. In an alternate embodiment, the ferrule 103 includes a plurality of phase gratings 201 on a single substrate 200, wherein the ferrule is rotatable relative to the laser pointer 100 such that two phase gratings 201 may be exchanged with respect to the laser beam. One or more such embodiments may utilize an off-center laser beam to illuminate the one or more desired phase gratings 201, alternate preferred embodiments for generating the off-center laser beam are discussed with reference to Figs. 5b and 5c.

Fig. 5a illustrates an isometric view of another alternate embodiment of the hand-held laser pointer 100 illustrated in Fig. 1. In this embodiment, the laser pointer 100, again illustrated having a pen-like shape, is coupled with a cylindrical substrate housing 103 having a rotatable ring 501. A circular substrate 200 having one or more gratings 201 is positioned within the cylindrical housing 103 such that rotation of the ring 501 causes the phase gratings 201 to be moved past the laser beam to generate an off-center image beam 105. Although ring 501 has been utilized in this embodiment, any suitably arranged mechanical, electrical or electro-mechanical configuration for exchanging, interchanging, or overlapping a plurality of substrates 200 and/or a plurality of phase gratings 201 may be used in addition to or substituted for ring 501 and/or the substrate housing 103.

Fig. 5b illustrates one embodiment for generating an off-center image beam 105 in accordance with the embodiment of the hand-held laser pointer illustrated in Fig. 5a. An off-center laser beam 500 is generated by positioning a pair of prisms 502 and 503 such that the generated laser beam 500 intersects and is reflected by prisms 502 and 503 causing the laser beam 500 to be stepped off-axis. The off-center laser beam 500 then intersects and illuminates one or more select phase gratings 201 on one or more circular substrates 200 in Fig. 5a to generate the off-center image beam 105.

Fig. 5c illustrates an alternate embodiment for generating an off-center image beam 105 in accordance with the embodiment of the hand-held laser pointer illustrated in Fig. 5a. The off-center laser beam 500 is alternately generated by positioning a pair of mirrors 504 and 504 such that the generated laser beam 500 is reflected by the mirrors 504 and 505 to cause the laser beam 500 to be stepped off-axis. The off-center laser beam 500 then intersects and illuminates one or more select phase gratings 201 on one or more circular substrates 200 in Fig. 5a to generate the off-center image beam 105.

Fig. 5d illustrates one embodiment of the rotating ring 501 in accordance with the embodiment of the hand-held laser pointer illustrated in Fig. 5a. The off-center laser beam 500 is illustrated as being stepped off-axis to intersect phase grating 201a fixed to circular substrate 200, which in Fig. 5a is located within cylindrical housing 103. In an alternate embodiment, a plurality of rotating rings 501 may be coupled with the laser pointer 100 such that one or more particular phase gratings 201 may be substituted for, exchanged with or overlapped with one another.

Fig. 6 illustrates a flow diagram for assembling and using the hand-held laser pointer 100 and substrate 200 in accordance with the principles of the present invention. Preferably, the phase gratings 201 are designed using scaler diffraction theory via a computer optimization process, block 601. The computer optimization process generates a data set representative of a desired phase grating 201, or beam array generator, to be fixed to the substrate 200. Fixed, as used herein, shall mean one or more of the following, but is not limited to, attached, imprinted, adhered, etched, mounted, inserted, scratched, or otherwise imaged or positioned. Phase gratings are desired in optical systems due to their higher diffraction efficiency. Diffractive phase gratings are more fully described in "Dammann Gratings for Laser Beam shaping," Optical Engineering, vol. 28, no. 12, pp. 1267-1275, Dec. 1989, by J. Jahns, M.M. Downs, M.E. Prise, N. Streibl, and S.J. Walker, which is incorporated herein by reference. The preferred optimization process is more fully described in copending and coassigned United States Patent Application Serial No. (Attorney Docket No. R.L. Morrison 4), entitled "Methods and Systems for Designing Beam Array Generators," and in the article, "A Selective Cell-based Algorithm for Designing High Efficiency Beam Array Generators," Diffractive Optics, vol. 1, pp. 76-79, OSA Technical Digest Series, 1994, by R.L. Morrison and M.J. Wojcik, which are both incorporated herein by reference. The data set is preferably utilized by conventional processes to generate an amplitude mask, to transfer the pattern resident to the amplitude mask to a photosensitive resist, and to preform reactive ion etching to generate a phase mask, the phase grating 201 and substrate 200 combination.

The phase mask is then positioned within the substrate housing 103 which is then preferably coupled with laser pointer 100 at a laser beam generating end, block 602. If the embodiment under consideration includes a substrate 200 having more than one grating 201 and a second grating 201 is to be exchanged for or interchanged with a first grating 201, YES branch of decisional block 603, then, depending upon the current embodiment, either the substrate 200 or the substrate housing 103 is re-positioned such that the second grating 201 may be illuminated by the laser pointer 100, block 604. In an alternate embodiment, the second grating 201 may be resident to a second substrate 200, and it may be desirable to manipulate the first and second substrates 200 such that the second grating 201 is exchanged for, interchanged with, or overlaps the first grating 201 of the first substrate 200. In such an embodiment, the first and/or second substrates 200, and/or the substrate housing 103 will be repositioned such that the desired image is generated. The laser pointer 100 is selectively energized, such as by depressing button switch 107 in Figs. 1 and 3, to generate the desired image 106, block 605.

Fig. 7 illustrates an artist's rendition of a phase grating 201 designed in accordance with the preferred computer optimization process for use with any of the hand-held laser pointers in Figs. 1 and 3-5. This phase grating 201 includes both light and dark areas representative of the surface heights on the underlying substrate 200. For example, assuming that the phase grating has been etched into the substrate, the light areas might represent the unetched portions, whereas the dark areas would represent the etched portions. If the substrate is glass, the preferable etching is approximately the wavelength of the laser which is .6 microns in the preferred embodiment, and the phase grating would be approximately a 1mm square or less and would be replicated many times over the substrate 200. It should be noted that this illustration represents a two level hologram, and has been included herein for illustrative purposes only. Multi-level designs have higher diffraction efficiencies than the foregoing two-level phase grating, however, rigid submicron alignment tolerances must be maintained during the multi-step fabrication process of the multi-level designs to avoid potentially large fluctuations in beam array intensities. Two-level designs are therefore highly regarded, although multi-level designs are also well suited. Turning to Fig. 8, there is illustrated an artist's rendition of a holographic image generated utilizing any of the hand-held laser pointers 100 in Figs. 1 and 3-5 to illuminate the phase grating in Fig. 7.

Although the present invention and its advantages have been described in detail, it should be understood that various changes, substitutions and alterations can be made herein without departing from the spirit and scope of the invention.

## Claims

1. An apparatus for generating an image beam to display a select image, said apparatus comprising:
a hand-held device operable to generate a coherent beam of radiation; and
a first phase mask having a first side and a second side, said phase mask positioned such that said generated coherent beam of radiation intersects said first side of said first phase mask to thereby generate said image beam.

2. The apparatus as set forth in claim 1 further including means for selectively energizing said hand-held device to generate said coherent beam of radiation.

3. The apparatus as set forth in claim 1 wherein the hand-held device further comprises a switch operable to generate selectively the coherent beam.

4. The apparatus as set forth in claim 1 further comprising a housing coupled with said hand-held device wherein said first phase mask is positioned within said housing.

5. The apparatus as set forth in claim 4 wherein said housing includes means for moving said first phase mask within said housing.

6. The apparatus as set forth in claim 4 wherein said first phase mask is movable within said housing.

7. The apparatus as set forth in claim 4 wherein said housing is removable from said hand-held device.

8. The apparatus as set forth in claim 4 wherein said first phase mask includes a plurality of phase gratings, and further includes means for exchanging a second phase grating for a first phase grating.

9. The apparatus as set forth in claim 8 wherein said exchanging means includes a rotating ring.

10. The apparatus as set forth in claim 4 further comprising a second phase mask.

11. The apparatus as set forth in claim 10 wherein said second phase mask is positioned within said housing such that at least a portion of each of said first phase mask and said second phase mask are intersected by the coherent beam of radiation to generate said image beam.

12. An apparatus for generating an image beam to display a select image, comprising:
a hand-held laser pointer operable to generate and transmit a laser beam having a beam output end and a housing coupled to said beam output end; and
a first substrate including at least a first phase grating positioned in said housing so that said first phase grating is intersected by said transmitted laser beam to generate said image beam.

13. The apparatus as set forth in claim 12 further including a switch operable to generate selectively said laser beam.

14. The apparatus as set forth in claim 3 or 13 wherein said switch is a button switch.

15. The apparatus as set forth in claim 13 wherein said switch further includes a latch having an ON state and an OFF state, said latch operable to reverse and maintain its state each time said switch is operated.

16. The apparatus as set forth in claim 12 wherein said substrate includes a second phase grating and said housing further includes means for moving said substrate to position said second phase grating to be intersected by said laser beam to generate said image beam.

17. The apparatus as set forth in claim 16 wherein said moving means translates said substrate between a first position corresponding to one of said first and second phase gratings intersecting said laser beam and a second position corresponding to the other of the first and second gratings intersecting said laser beam.

18. The apparatus as set forth in claim 17 wherein said moving means performs linear translation.

19. The apparatus as set forth in claim 17 wherein said moving means slides said substrate within said housing.

20. The apparatus as set forth in claim 17 wherein said moving means performs rotatable translation.

21. The apparatus as set forth in claim17 wherein said moving means includes a rotating ring.

22. The apparatus as set forth in claim 12 wherein said housing is detachable from said beam output end.

23. The apparatus as set forth in claim 7 or 12 wherein said housing is a ferrule.

24. The apparatus as set forth in claim 12 wherein said substrate includes a second phase grating, and further includes means for exchanging said second phase grating for said first phase grating.

25. The apparatus as set forth in claim 12 further comprising a second substrate including at least one phase grating.

26. The apparatus as set forth in claim 25 wherein said second substrate includes a second phase grating, said apparatus further comprising means for overlapping said second substrate with said first substrate such that at least a portion of each of said first phase grating and said second phase grating are intersected by said transmitted laser beam whereby said transmitted laser beam illuminates at least a portion of said first phase grating and said second phase grating to generate said image beam.

27. A method for generating an image beam to display a select image, said method comprising the steps of:
positioning a first substrate including a first phase grating at a first location; and
producing a coherent radiation beam with a hand-held device, and illuminating said first phase grating with said produced coherent radiation beam to generate said image beam.

28. The method as set forth in claim 24 wherein said hand-held device has an ON state and an OFF state and is operable during said ON state to produce a coherent radiation beam and during said OFF state to not produce a coherent radiation beam, and said producing step includes the step of switching from said OFF state to said ON state.

29. The method as set forth in claim 27 wherein said producing step includes the step of depressing a switch, operating a latch having an active state and an inactive state, said latch operable to reverse and maintain its state each time said switch is depressed.

30. The method as set forth in claim 27 wherein said first substrate includes a second phase grating, and said positioning step includes the step of moving said first substrate to position said second phase grating at said first location to be intersected by said coherent radiation beam, said coherent radiation beam intersecting and illuminating said second phase grating to generate said image beam.

31. The method as set forth in claim 30 wherein said moving step includes the step of shifting linearly said first substrate.

32. The method as set forth in claim 30 wherein said moving step includes the step of rotating said first substrate.

33. The method as set forth in claim 32 wherein said rotating step further includes the step of turning a rotatable ring.

34. The method as set forth in claim 27 wherein said first substrate is positioned in a substrate housing coupled with said hand-held device, and said positioning step includes the step of detaching the substrate housing from said hand-held device.

35. The method as set forth in claim 27 wherein said first substrate includes a second phase grating, and further includes the step of exchanging said second phase grating for said first phase grating and producing said select image from said second phase grating.

36. The method as set forth in claim 27 further including the step of overlapping a second substrate including a second phase grating with said first substrate such that at least a portion of each of said first phase grating and said second phase grating are intersected by said coherent radiation beam, said coherent radiation beam illuminating said portion of said first phase grating and said second phase grating to generate said image beam.
